(19) **Europäisches Patentamt**
**European Patent Office**
**Office européen des brevets**

(11) **EP 4 151 595 A1**

(12) **EUROPEAN PATENT APPLICATION**

(43) Date of publication:
**22.03.2023 Bulletin 2023/12**

(21) Application number: **21196739.3**

(22) Date of filing: **15.09.2021**

(51) International Patent Classification (IPC):
**C01B 32/25** (2017.01)    **C01B 32/28** (2017.01)
**H01G 11/36** (2013.01)    **H01M 4/00** (2006.01)

(52) Cooperative Patent Classification (CPC):
**C01B 32/25; C01B 32/28; H01G 11/36; H01M 4/625**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Fyzikální ústav AV CR, v.v.i.**
  **18221 Praha 8 (CZ)**
• **Slovenská Technická Univerzita v Bratislave**
  **812 43 Bratislava (SK)**

(72) Inventors:
• **Kromka, Alexander**
  **162 00 Praha 6 (CZ)**
• **Stehlik, Stepan**
  **162 00 Praha 6 (CZ)**
• **Pfeifer, Rene**
  **162 00 Praha 6 (CZ)**
• **Szabo, Ondrej**
  **162 00 Praha 6 (CZ)**
• **Potocky, Stepan**
  **162 00 Praha 6 (CZ)**
• **Marton, Marian**
  **812 19 Bratislava (SK)**
• **Vojs, Marian**
  **812 19 Bratislava (SK)**

(54) **NANOPOROUS DIAMOND STRUCTURE, METHOD OF PRODUCTION THEREOF, A BATTERY AND A SENSOR COMPRISING THEREOF**

(57)    The present invention relates to a method of nanoporous polycrystalline diamond structure formation, product thereof and use of the product as an electrode in a battery or supercapacitors or used for detection of electro-active species. The method comprises the step of thermal etching a diamond structure by a nitrate salt, preferably $LiNO_3$. The product obtainable by the method according to the present invention is a nanoporous diamond formed from diamond crystals in size from 1 nm to 500 nm which are interconnected to each other including voids, thereby forming a compact porous structure having porosity from 10% to 90%, wherein the diamond structure is having fractal like geometry. In a preferred embodiment, the nanoporous diamond structure can be used as an electrode or as a sensor for detection electro-active species.

Fig. 1

**EP 4 151 595 A1**

**Description**

Technical field

The present disclosure relates to nanomaterials, in particular to a diamond nanostructure. More particularly, the present invention pertains to a special type of diamond nanostructure having nanopores with fractal-like geometry and known in the state of the art as diamond nanofeathers or nanodendritic diamond structure.

In a second aspect, the present invention relates to a method for producing said diamond nanostructure having nanopores, known as the diamond nanofeathers or nanodendritic diamond structure.

In a third aspect, an electrochemical capacitor, a battery and a sensor comprising said diamond nanoporous structures according to the present invention are provided.

State of the Art

Development of new efficient energy storage devices are a vital demand for daily life, e.g. for use on hybrid cars and electronic devices. In this sense, batteries and electrochemical capacitors play a pivotal role. Batteries exhibits high energy densities (up to 260 Wh/kg), but present as main disadvantages a slow power deliver or uptake, especially in the case of Li-ion batteries. In contrast, electrochemical capacitors display fast charge and discharge in a range of a few seconds, but have lower energy-densities than batteries. Both systems demand conductive materials with large surface area that work in a broad range of potential as electrodes.

Porous boron-doped diamond electrodes pose as suitable candidates for use not only in energy storage devices but also in electroanalytical chemistry. This is due to high electrical conductivity, broad potential window (3.2 V in aqueous media and 4.9 V in organic media), electrocatalytic activity, corrosive resistance, anti-fouling properties, low background current, controllable wettability (as result of its surface termination) and large surface area.

Various top-down to bottom-up methods have been proposed and used to produce porous diamond materials. Among them etching of chemical vapour deposition grown diamond materials using masks, oxygen plasma or diamond growth on a porous substrate are the common strategies for generating porous diamond materials. More recently, diamond nanofeathers were made by electrochemical etching of electrically conductive boron doped ultrananocrystalline diamond in a mixture of organic and inorganic acids or salt solutions. Although this method produces a high capacitive nanoporous materials (in the range of $mF.cm^{-2}$), rather long time (around 40 h) of etching and use of harsh chemicals make the process energy demanding and environmentally problematic.

In the state of the art, a polycrystalline diamond refers to freestanding bulk of diamond or diamond film (also referred as a thin layer) deposited on a substrate, composed of diamond crystals having different sizes in at least one dimension from 1 nm to 20 $\mu$m, wherein the diamond ($sp^3$) is embedded in carbon (amorphous and $sp^2$) matrix. Hereinafter, we will use the term polycrystalline nanodiamonds for composed diamond crystals having size in at least one dimension from 1 nm to 500 nm. As a special embodiment of polycrystalline nanodiamonds, a state of the art literature refers to an ultrananocrystalline diamond as composed diamond crystals having size in at least one dimension from 1 nm to 20 nm. The term polycrystalline microdiamond refers to composed diamond crystals having size in at least one dimension from 500 nm to 20 $\mu$m.

Molten salt thermal etching of monocrystalline diamond surfaces with potassium nitrate ($KNO_3$) are known from F.K de Theije, O Roy, N.J van der Laag, W.J.P van Enckevort, Oxidative etching of diamond, Diamond and Related Materials, Volume 9, Issues 3-6, 2000, Pages 929-934, ISSN 0925-9635, https://doi.ora/10.1016/S0925-9635(99)00239-3. The document presents an alternative method of etching to electrochemical etching. An embodiment of the method as described in the article uses the diamond, which is immersed into the molten potassium nitrate. The main drawback is the need for high temperature, over 600 °C and keeping the potassium nitrate in molten state for a long time. Recently, a molten salt thermal etching process using $KNO_3$ at a moderate temperature (535 °C) was applied to nanodiamonds and the resulted particles presented unique round shape characteristics, which prospect those particles to be used for cellular imaging and drug delivery. Furthermore, a mixture of nitrate molten salts is often used for thermal energy, storage, solar cells and laser ablation of metals.

The problem to be solved by the present invention is thus a provision of a method for low temperature and environmentally friendly manufacturing of porous polycrystalline diamond, whereas the etching salt is need not be provided in such an amount and is capable to etch the diamond effectively.

US2018119308 discloses a method for forming diamond nanostructures with large specific area can include forming porous diamond nanostructures by means of selective electrochemical etching of $sp^2$-bonded carbon and partially removing $sp^3$-bonded carbon in nanocrystalline and ultrananocrystalline diamond. The method according to US2018119308, however, uses an approach of removing $sp^2$ content from a film deposited on a substrate. Furthermore, the document discloses methods of providing a feather-like (porous) diamond nanostructure as substantially described above. This method is limited to the use of electrically conductive diamond films. The main drawback of the method according to the above-mentioned document is decreasing content of $sp^2$ carbon phase. Therefore, the ratio between $sp^3$ and $sp^2$ and/or other dopant is not constant.

Summary of the Invention

In a first aspect of the present invention, a nanoporous diamond structure is disclosed. The nanoporous structure is formed by diamond crystals in size from 1 nm to 500 nm interconnected each to other involving voids finally forming a compact porous structure with porosity from 10 % to 90 %, wherein the structure is having fractal-like geometry.

In a second aspect of the present invention, a method for manufacturing nanoporous polycrystalline diamond using molten salt etching is disclosed.

The method according to the present invention is defined by claim 1. The method, in particular, comprises the steps of:

a. providing a polycrystalline diamond structure;
b. providing nitrate salt on surface of the polycrystalline diamond structure, wherein the nitrate salt is in solid phase;
c. heating the polycrystalline diamond structure provided with the nitrate salt to temperature above a melting point of the nitrate salt, thereby providing melted nitrate salt on the polycrystalline diamond structure surface; and
d. etching the polycrystalline diamond structure by the molten nitrate salt.

The diamond structure can be a freestanding diamond, such as a bulk of diamond material or a sheet of the artificially made carbon-like diamond, i.e. diamond grown by the state of the art method, which are configured to stand or have structural integrity without any support by a substrate. In another embodiment, the diamond structure can be a layer deposited on a substrate. The deposition can be provided by the state-of-the art method such as physical or chemical vapour deposition. In another embodiment, the diamond structure can be two diamond or diamond-like layers deposited on each respective surface of a substrate. In case of spatial body having more than two surfaces, the diamond layer can be provided on each respective surfaces of the body. In another embodiment, the diamond structure can be a multi-layered composite material having a periodic structure, such as a multilayer deposited on a substrate, wherein e.g. the first layer can be intrinsic diamond, the second layer can be a boron-doped diamond, the third layer can be intrinsic diamond and the forth layer is another boron-doped diamond. The purity of the diamond or the dopant concentration in an artificially doped diamond, and order of the layers in the multilayer do not play a role as far as the final multilayer structure is compact.

In a preferred embodiment, the thickness of the diamond structure can be 20 $\mu$m or less. In some preferred embodiment, the thickness can be from 1 nm up to 20 $\mu$m. More preferably from 50 nm up to 1 $\mu$m. Even more preferably, from 50 nm up to 500 nm. The combination of thicknesses from 1 nm up to 500 nm is particularly advantageous. In some advantageous embodiment, the present invention can be a nanoporous diamond structure deposited on a substrate, wherein the thickness of the layer is less than 5 $\mu$m.

The above-mentioned impurities incorporated in the diamond structure can be selected from the non-exhaustive list comprising: boron, phosphor, $sp^2$ carbon, silicon, nitrogen, metal, in particular nickel. The diamond, however, may contain a further impurities or mixture thereof in accordance with the desired effect. For example, nanoporous boron doped polycrystalline diamond structure according to the present invention may increase electric conductivity. In some embodiment, nanoporous boron doped polycrystalline diamond structure can be used as an electrode with three-dimensional porous nanostructure which is capable to enhance its specific capacitance. In yet another embodiment, porous phosphorus-doped diamond according to the present invention can change the resistivity according to the amount of doping, and shows n-type conductor-like conductivity. In yet another embodiment, porous silicon- or nitrogen- or metal-doped diamond according to the present invention can change the optical properties according to the amount of doping, and shows photoluminescence from incorporated abovementioned dopants as optically active centres.

In a preferred embodiment, the nitrate salt can be lithium nitrate ($LiNO_3$) or potassium nitrate ($KNO_3$). Said nitrate salt is in solid phase and is deposited on a surface of the diamond structure before increasing the temperature above the melting point of the respective nitrate salt. For example, in case of $LiNO_3$, powder of $LiNO_3$ can be scattered on the diamond structure surface and the temperature above the melting point, which is 255 °C, preferably the temperature is above 300 °C. Once the nitrate salt achieves the temperature over its melting point, it starts etching of the diamond structure and creates porous diamond. The step of etching by nitrate salt removes at least part of the polycrystalline diamond structure so that uniform surface of the polycrystalline diamond structure is transformed into a porous diamond structure, in particular to the diamond nanofeathers as known in the state of the art. Furthermore, an advantage of the present invention is that the etching method does not remove only $sp^2$ carbon phase, compared to the state of the art technology mentioned above. The ratio between $sp^2$ and $sp^3$ carbon phase, resp. the dopants as mentioned above, are constant. Therefore, the method can prepare highly doped nanoporous diamond structures, resp. nanofeathers or nanodendritic diamond structures having the same ratio between $sp^2$ and $sp^3$ carbon phase. Furthermore, oxidative etching is less energy demanding than the state-of-the-art methods. In some embodiment, the boron-doped diamond structure etched for at least 1 h presents high capacitive value about 3,615.8 $\mu F.cm^{-2}$, i.e. 58x more than the pristine boron-doped nanocrystaline diamond, and enhanced active area in the range from 10 % to 90 %.

In a preferred embodiment, the step of providing nitrate salt on surface of the diamond structure comprising applying nitrate salt powder on the diamond structure surface. The powder application on surface can be a simple sputtering on the surface. In another embodiment, the powder application can be more sophisticated such as electro-sputtering of fine powder particles, or an electrospray distribution of powder dispersed in a liquid via imposing the electrical forces on the liquid jet flowing from a capillary nozzle. In another embodiment, the application of the powder can comprise two steps. In the first step, the fine nitrate powder is dissolved in the liquid. The liquid may preferably not dissolve the fine powder completely or partially or chemically react with the powder to form its products. The resulting mixture is subsequently a solution, preferably dispersion. In the second step, the solution, preferably the dispersion, is applied to the surface of the polycrystalline diamond structure, allowing the liquid to evaporate. This process ensures homogeneous coverage of the polycrystalline diamond structure by the fine powder. It should also be noted, that the temperature during evaporation must not exceed the melting point of the nitrate salt, as the etching or chemical reaction could occur while the liquid is still present on the surface of the polycrystalline diamond structure, which is generally undesirable. Examples of depositing powder on the surface of a substrate using a dispersion may be $LiNO_3$ partially dissolved in water, with the water subsequently allowed to evaporate. Depending on the volume of water applied to the surface of the diamond substrate, the water may be allowed to evaporate even at room temperature. Preferably, a method of continuously adding a dispersion solution to the surface of the diamond structure may also be chosen, whereby a sufficient amount of the nitrate salt is deposited on the surface of the diamond structure in this manner.

In a preferred embodiment, the method further comprising the step of supplying oxygen and/or hydrogen and/or air atmosphere and/or water vapor during the etching in order to simultaneously tailor the surface chemistry of diamond porous structure or to enhance the etching rate.

In another preferred embodiment, the step of etching lasts at least 1 hour, preferably up to 3 hours.

In another preferred embodiment, the step of etching is provided by the nitrate salt, which is metal nitrate, preferably mono-valence metal nitrate, more preferably alkali metal nitrate, even more preferably $LiNO_3$, or $KNO_3$. More preferred embodiment is lithium nitrate ($LiNO_3$) since it has a lower melting point (247 °C) and lower decomposition temperature (485 - 650 °C) than $KNO_3$, (550 - 790 °C) which in principle enables broad processing window for etching. In a more preferred embodiment, wherein the nitrate salt is $LiNO_3$, the heating of the diamond structure is above 300 °C, preferably above 400 °C.

The resulted product of the method according to the present invention can be a porous polycrystalline diamond structure formed from diamond crystals in size from 1 nm to 500 nm interconnected each to other involving voids finally forming a compact porous structure with porosity from 10 % to 90 %.

The third aspect of the present invention relates to a sensor for electroanalytical applications. The sensor comprises an electrode, wherein the electrode is the porous diamond structure according to the present invention. The sensor allows enhanced active area and increase peaks current for anodic and cathodic ($I_{pa}$ and $I_{pc}$) reactions as demonstrated by used standards - $[Fe(CN)_6]^{3-/4-}$ and $[Ru(NH_3)_6]^{2+/3+}$. The batteries, in some aspect, also increase its capacitance.

In a further aspect of the present invention, an environmentally friendly, low cost and deliver diamond electrodes having superior capacitive properties is provided. The porous polycrystalline diamond structure is suitable for super capacitors and batteries.

In a further aspect of the present invention, intrinsic diamond nanoparticles obtainable from the nanoporous diamond structure according to the present invention is provided.

In a further aspect of the present invention, doped diamond nanoparticles obtainable from the nanoporous diamond structure according to the present invention is provided.

Brief description of the drawings and tables

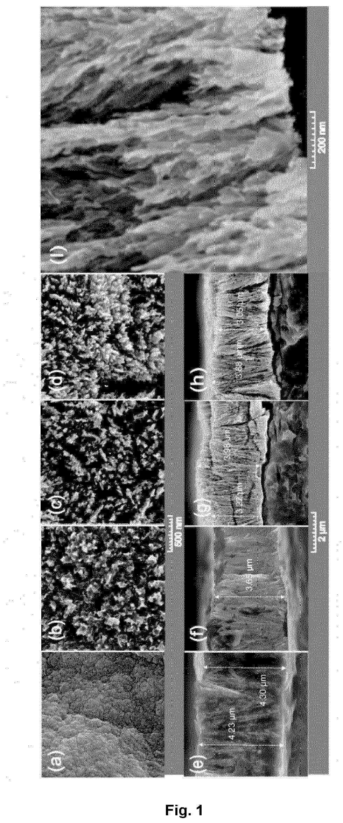

Fig. 1 represents scanning electron microscopy images - top view and cross section - of the pristine boron-doped ultrananocrystalline diamond (a, e) before and after molten salt thermal etching treatment for 1 h (b, f), 2 h (c, g) and 3 h (d, h). Cross section of nanoporous diamond structure formed after molten salt thermal etching treatment at 450 °C for 3 h (i).

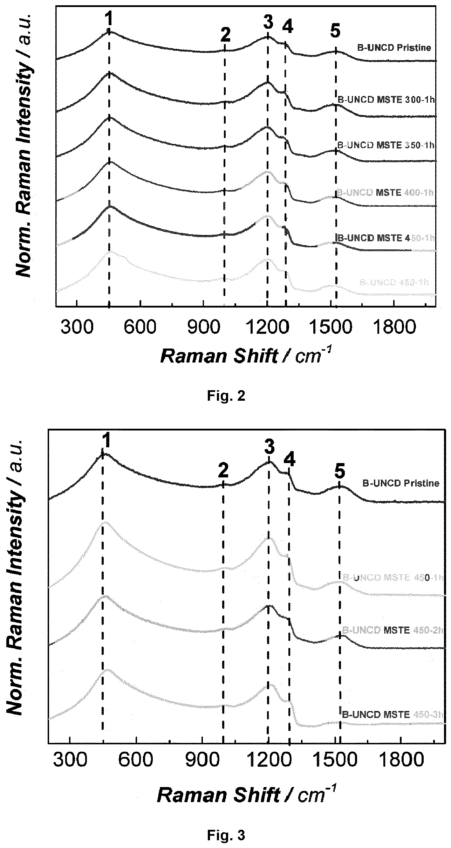

Fig. 2. represents 532 nm Raman spectra of boron-doped ultrananocrystalline diamond treated by molten salt thermal etching at constant time of 1 h at different temperatures: 300 °C (-), 350 °C (-), 400 °C (-), 450 °C (-) and without $LiNO_3$ at 450 °C (-) and pristine (-).

Fig. 3. represents 532 nm Raman spectra of boron-doped ultrananocrystalline diamond treated by molten salt thermal etching at constant temperature of 450 °C for different time of etching: 1 h (—), 2 h (—), 3 h (—) and pristine (—).

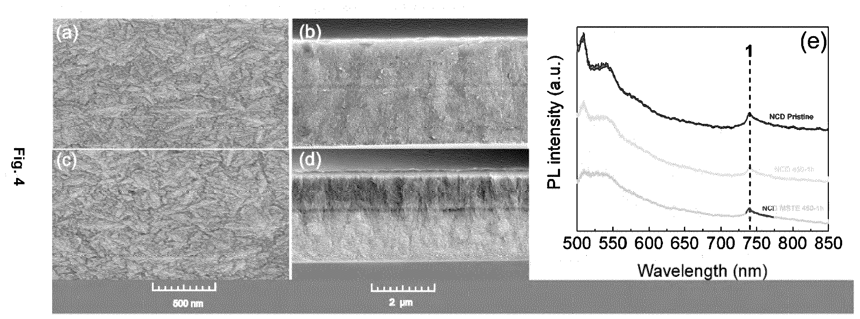

Fig. 4. represents scanning electron microscopy images - top view and cross section - of the pristine Si-V center nanocrystalline diamond (a, b) before and after molten salt thermal etching treatment for 1 h (c, d). The photoluminescence spectra (e) at 442 nm of Si-V nanocrystalline diamond (NCD) treated by molten salt thermal etching at constant time of 1 h at at 450 °C (—) and pristine (—).

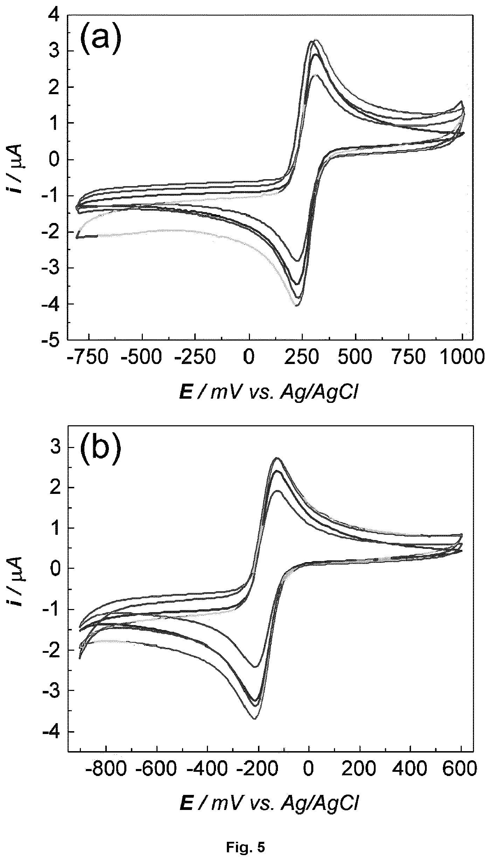

Fig. 5 represents cyclic voltammograms of the redox systems 1 mM $[Fe(CN)_6]^{3-/4-}$ (a) and 1 mM $[Ru(NH_3)_6]^{3+/2+}$ (b) both in 1.0 M KCl for boron-doped ultrananocrystalline diamond treated by molten salt thermal etching at constant temperature of 450 °C for 1 h (—), 2 h (—), 3 h (—) and pristine (—).

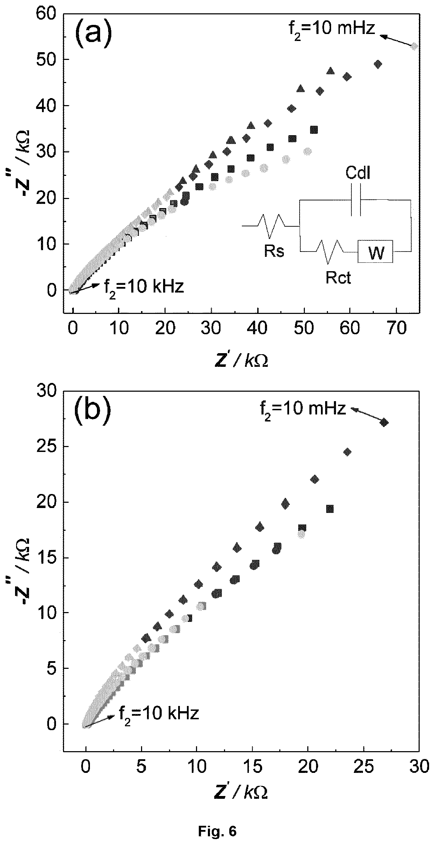

Fig. 6 represents nyquist plots of the redox systems 1 mM $[Fe(CN)_6]^{3-/4-}$ (a) and 1 mM $[Ru(NH_3)_6]^{3+/2+}$ (b) both in 1.0 M KCl for boron-doped ultrananocrystalline diamond treated by molten salt thermal etching at constant temperature of 450 °C for 1 h (•), 2 h (▲), 3 h (♦) and pristine (■).

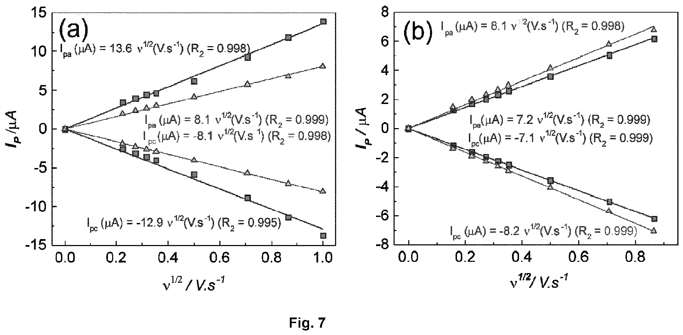

Fig. 7 represents dependency of the peak current cathodic ($I_{pc}$) and anodic current ($I_{pa}$) for pristine boron-doped ultrananocrystalline diamond (—,■) treated by molten salt thermal etching at temperature 450 °C for 3 h (-, ▲).

Table 1 summarizes parameters used for the growth of boron doped ultrananocrystaline diamond sample by linear antenna microwave plasma CVD from trimethyl borate diluted in $H_2$ and $CO_2$.

Table 2 summarizes values of peak-to-peak separations ($\Delta E_P$), effective active area ($A_{eff}$), the ratio between the anodic and cathodic peak heights ($I_{Pa}/I_{Pc}$) for redox markers $[Fe(CN)_6]^{3-/4-}$, $[Ru(NH_3)_6]^{2+/3+}$ (all of c = 1 mmol.L$^{-1}$) in 1 mol.L$^{-1}$ KCl and widths of the potential window in 1 mol.L$^{-1}$ HCl electrolyte for pristine boron doped ultrananocrystaline diamond sample (B-UNCD pristine) and molten salts etched samples with LiNO$_3$ in different time of etching (1 - 3 h) at 450 °C. The specific effective double-layer capacitance ($C_{eff}$) values were estimated using the capacitor element value from EIS measurements carried out in $[Fe(CN)_6]^{3-/4-}$ standard solution.

Table 3 summarizes values of the specific effective double-layer capacitance ($C_{eff}$) values estimated using the capacitor element value from EIS measurements carried out in $[Fe(CN)_6]^{3-/4-}$, $[Ru(NH_3)_6]^{2+/3+}$ standard solutions (all of c=1mmol.L$^{-1}$) in 1 mol.L$^{-1}$ KCl and 1 mol.L$^{-1}$ HCl electrolyte solution for pristine boron doped ultrananocrystaline diamond sample (B-UNCD pristine) and molten salts etched samples with LiNO$_3$ in different time of etching (1 - 3h) at 450 °C.

Detailed description of the Invention

The inventors conducted comparative examples of the method according to the present invention for production of boron doped ultrananocrystalline diamond with high doping levels, wherein the boron concentration was up to $10^{21}$ cm$^{-3}$, by using a linear antenna microwave activated chemical vapour deposition system. In this particular example, the diamond structure was a thin layer deposited on a substrate. The substrates were polished Si (100) wafers. Prior to the thin layer depositions, substrates were cleaned in ultrasonic bath using acetone, isopropyl alcohol and deionised water and subsequently seeded with diamond nanoparticles having an average diameter <10 nm, wherein the nanoparticles were dispersed in deionized water via ultrasonic bath. Trimethyl borate (B(OCH$_3$)$_3$) diluted in $H_2$ and $CO_2$ was used as a precursor for both diamond growth and doping. Moreover, $CH_4$ was added into the gas mixture as well. Detailed process conditions are summarized in Table 1. Microwave power of the linear antenna microwave activated chemical vapour deposition system was set to 2x6 kW at total pressure 30 Pa, wherein the substrate temperature was set to 590 ± 20 °C. According to the inventors' measurement, final film thickness was 4.2 ± 0.1 μm.

This resulted polycrystalline diamond layer doped by boron was used to obtain the nanoporous diamond by molten salt thermal etching using LiNO$_3$.

All boron-doped ultrananocrystaline diamond samples were first cleaned by a rinse with ethanol and deionized water and blown by nitrogen. For all the molten salt thermal etching processes, 10 μL of the solution of 1 M of LiNO$_3$ was deposited by dropcasting on the surface of the boron-doped ultrananocrystaline diamond samples, each of 1.0 cm x 0.5 cm dimensions. In the first set, the time was kept constant at 1 h and the molten salt thermal etching treatment was performed at five different temperatures in the range of 300 °C to 450 °C. This helped us to identify the 450 °C as the most suitable temperature for the formation of nanoporous diamond. In the second set, the temperature was maintained steadily at 450 °C and three different times of etching were tested between 1 h and 3 h. Thermal etching with

molten $LiNO_3$ was performed in a laboratory furnace LV 15 (LAC) under controlled temperature. After oxidation the samples were rinsed and washed with deionized water in an ultrasonic bath for 10 min. Different temperatures (300 °C - 450 °C) and time (1-3 h) for molten salt thermal etching treatment using $LiNO_3$ were tested. All samples were characterized by Raman spectroscopy, scanning electron microscopy and the electrochemical properties were tested by Cyclic Voltammetry and Electrochemical Impedance Spectroscopy.

Fig. 1 shows the SEM images (top view and cross-section) of the pristine B-UNCD films and after molten salt thermal etching at 450 °C with $LiNO_3$ for 1 h to 3 h. All scanning electron microscopy images of B-UNCD films were acquired at 10 kV and on a range of 5k to 300k magnification (with used device MAIA 3, Tescan) under 0° and 90° (cross section) in the regime of secondary electrons. The air oxidation has been used for comparison, and didn't lead to formation of nanoporous structure, but only to formation of pits. In contrast, molten salt thermal etching treatment leads to formation of nanoporous structure. The cross section image (Fig. 1 (f)), points out that the etching can be verified only at the immediate upper surface of the film after 1 h. The nanoporous structure in the whole layer of thickness 3.36 $\mu$m was achieved after 3 h (Fig. 1 (d) and (h)). The thickness of the boron doped ultrananocrystaline diamond layer decreases with the time of etching from 4.26 $\mu$m for the unetched film to 3.37 $\mu$m for the molten salt thermally etched film etched for 3 h.

Raman spectroscopy was used to evaluate possible evolution in content of $sp^3$ and $sp^2$ carbon phases and boron content after the molten salt thermal etching treatment. The Raman spectra was measured. The sample was excited by continuous wave 532 nm green laser diode focused to a spot of 10 $\mu$m on the sample in a direction perpendicular to the sample plane using a 10x objective for 50 seconds. The spectra of the sample treated by molten salt thermal etching, do not indicate any degradation of boron doped ultrananocrystaline diamond properties. Thus, after the molten salt thermal etching treatment, the atomic structure and electronic properties of the pristine boron-doped ultrananocrystaline diamond are preserved. In contrast, visual appearance and the colour of the boron-doped ultrananocrystaline film changed from grey to black after molten salt thermal etching at 450 °C for 60 min. The colour change indicates a presence of nanoporous formation in the diamond structure, because porous diamond structure partially absorbs visible light. This temperature was found as optimal temperature for MSTE with $LiNO_3$ to evaluate possible formation of nanoporous structure.

Fig. 2. shows the Raman spectra for the boron doped ultrananocrystaline diamond samples treated by molten salt thermal etching for 1 h at different temperatures. The Raman spectra show five peaks which are all characteristic to highly doped boron doped ultrananocrystaline diamond material. The peaks number 1 (468 cm$^{-1}$) and 3 (1208 cm$^{-1}$) arise due to boron incorporated in the diamond lattice. It can be observed that those peaks remain unchanged in its frequency and intensity, which indicates that the boron content remains constant for the molten salt thermal etching presented. Peak number 2 (990 cm$^{-1}$) is characteristic of the silicon substrate on which the boron doped ultrananocrystaline diamond film was deposited. The $sp^3$ diamond peak appearing at 1332 cm$^{-1}$ in pure diamond is here shifted to 1283 cm$^{-1}$ due to a Fano effect thanks to the high concentration of boron, which were also observed elsewhere. Non-diamond carbon (G-band) peak appears at 1512 cm$^{-1}$. The diamond present good high quality, despite of its high content of boron. No change of $sp^3$ and $sp^2$ ratio was observed. Although the MSTE films etched for 450 °C for 1 h, exhibited a change in color from gray to black, no change in chemical composition was observed by Raman. This fact could indicate a porous material has been formed, thus this temperature was set as optimal temperature for MSTE with $LiNO_3$ to evaluate possible formation of nanoporous structure. The effect of time of etching (1 h - 3 h) for constant temperature of 450 °C was also evaluated by Raman.

Fig. 3 shows the Raman spectra for the boron doped ultrananocrystaline diamond treated by molten salt thermally etched samples at steadily temperature of 450 °C for three different times of etching (1 h - 3 h). The same good high quality diamond Raman spectra observed for the first set of experiments is preserved. Non-diamond carbon (G-band) decreases drastically for the sample etched for 3 h. Which indicates a vital increase on the $sp^3$ and $sp^2$ ratio, due to decline of non carbon contribution of the film. This fact can lead to changes on electrical properties among the time dependency etched films.

Fig. 4 shows surface morphologies and photoluminescence spectra of ultrananocrystalline diamond samples doped with optically active silicon centers. Figures 4a and 4b show the top and cross section views of non treated sample (i.e. NCD Pristine). Figures 4c and 4d show the top and cross section views of sample treated by molten salt thermal etching for 1 h at temperature of 450°C. Figure 4e shows photoluminescence spectra of non treated sample (i.e. NCD Pristine), sample treated by molten thermal etching for 1 h at temperature of 450°C (NCD MSTE 450-1h) and sample treated by thermal etching for 1 h at temperature of 450°C (NCD 450-1h). Peak 1 localized at 738 nm reflects silicon vacancy optical center in the diamond which is present for all samples.

The molten salt thermally etched boron doped ultrananocrystaline diamond samples as well as the pristine substrates in size of 5 x 10 mm were used for fabricating electrochemical electrodes. A printed circuit board was used as an electrode holder, from which a size of 5 x 20 mm was milled. The conductive and electrical connection of the electrode consists of copper. A polymer protective coating (ESL 240-SB polymer protective coating) was utilized to insulate the substrate and inactive conductive parts during all electrochemical measurements. Boron doped ultrananocrystalline diamond electrodes were glued with 240-SB polymer paste used as protective and electrically insulating coating.

The conductive bonding of the substrate on the holder was made using a silver (Ag) conductive paste (Dotite® Silver Paint D-550). After application of the silver conductive paste, the electrode was heated for 100 °C for 30 minutes. The blue paste was applied to the electrode and heated at 200 °C for 1 h.

To assess the electrochemical performance, the boron doped ultrananocrystaline diamond films treated by molten salt thermal etching were used as electrodes and characterized by Cyclic Voltammetry and Electrochemical Impedance Spectroscopy. The properties were compared to pristine boron doped ultrananocrystaline diamond material. The electrodes reversibility was evaluated for two different pair of standards in the anodic and cathodic region, i.e. - $[Fe(CN)_6]^{3-/4-}$ and $[Ru(NH_3)_6]^{2+/3+}$, respectively. Fig. 5 and 6 present the results of cyclic voltammetry and electrochemical impedance spectroscopy characterization for both standards, respectively. The obtained voltamograms - Fig. 5 (a) and (b) - are smooth and reproducible with well-defined anodic and cathodic peaks for each standard on its potential range. The peaks current for anodic and cathodic ($I_{pa}$ and $I_{pc}$) reactions for both standards increases 9.6 %, 52.7 % and 30.5 % for the films etched for 1 h, 2 h and 3 h, respectively, when compared to the pristine film. The effective active area ($A_{eff}$) of each electrode material, was calculated using the Randles-Sevcik equation from the voltammograms. The obtained $A_{eff}$ values of all the studied samples are summarized in Table 2. An increase of 11 % of $A_{eff}$ is observed for the samples of boron doped ultrananocrystaline diamond treated by molten salt thermal etching for 1 h and 2 h. Both characteristics pose as promising for electroanalytical applications, by the increase of the peaks current for anodic and cathodic ($I_{pa}$ and $I_{pc}$) reaction for $Fe(CN)_6^{3-/4-}$ and $[Ru(NH_3)_6]^{2+/3+}$ and the effective area of the electrode, boosting sensor limits of detection and quantification. To evaluate the effect of the formed nano-pores on capacitive properties of molten salt thermal etching treated boron doped ultrananocrystalilne diamond, electrochemical impedance measurements were made using both standards (Fig. 6 (a) and (b)). A semicircle behaviour in the Nyquist plot is observed for the samples analysed. Molten salt thermally etched samples presented by a two times larger value of the semi-circle radius when compared to the ones without it. The equivalent circuit analysis was performed for the case of $[Fe(CN)_6]^{3-/4-}$, and the equivalent circuit is shown as an inset in Fig. 6 (a). The solution resistance ($R_s$), charge transfer resistance ($R_{CT}$), Warburg impedance (W) and double layer capacitance ($C_{dl}$) elements were determined. An increase in semi-circle radius for the molten salt thermally etched samples indicates a substantial gain in the value of capacitance. The values of capacitance ($C_{eff}$) were calculated dividing the value of double layer capacitance by the effective area and are summarized in Table 2 and 3. All electrochemical measurements were carried out using a Metrohm® AUTOLAB potentiosta/galvanostat PGSTAT302N with a frequency analyser FRA32M module controlled by the software NOVA 2.1.4. A silver chloride electrode (Ag/AgCl, 3 M KCl) was used as a reference electrode. Hexaammineruthenium chloride, potassium chloride, potassium hexacyanoferrate(III) (all Sigma-Aldrich), ethanol for UV, nitric acid and hydrochloric acid (all Penta) were all of analytical grade and used without further purification. Deionized water was used in all cases. For molten salt thermal oxidation experiments, aqueous stock solutions of 1.0 M $LiNO_3$ (99.5 %, Carl Roth) were prepared by dissolving 1.7672 g of pure substance in 25 mL of deionized water. Standard solutions of 1 mM of $K_4[Fe(CN)_6]$ and 1 mM $[Ru(NH_3)_6]Cl_3$ in 1.0 M of KCl were used. All solutions were kept in plastic vessels and stored at ambient temperature. The effective active area (*$A_{eff}$*) was estimated by cyclic voltammetry using $K_4[Fe(CN)_6]$ solution in scan rate range for 0.025 V.s$^{-1}$ to 1.000 V.s$^{-1}$, based on the Randles-Sevcik equation for a reversible process:

$$I_P = (2.69x10^5)\, n^{2/3} A_{eff}\, D^{1/2}\, v^{1/2} c_0 \qquad (1)$$

where *Ip* is anodic current peak (A), *n* is the number of transferred electrons, *D* is the diffusion coefficient of $K_4[Fe(CN)_6]$ in this case (7.6 x 10$^{-6}$cm$^2$s$^{-1}$), *v* is the scan rate (V.s$^{-1}$) and *$c_0$* is concentration of the electroactive species, in this case, $K_4[Fe(CN)_6]$ (10$^{-6}$ mol cm$^{-3}$). electrochemical impedance spectroscopy was performed for all boron doped ultrananocrystaline diamond samples using both standard solutions and in 1.0 M HCl solution as well, all in the range of 10 kHz to 10 MHz. The equivalent circuit analyses were made for each solution. All electrochemical impedance spectroscopy measurements were repeated 3 times for each standard. For all boron doped ultrananocrystal diamond electrodes, the dependency of the peak current height (*$I_P$*) with square root of the scan rate (*$v^{1/2}$*) was evaluated for anodic and cathodic reactions, using both standards. The linear dependence of $I_p$ with $v^{1/2}$ indicated that both reactions are controlled by diffusion - Figure 7 (a) and (b).

Table 2 also summarizes all the values for reversibility for both standards, potential window and effective capacitance. It can be noticed that for both markers $[Fe(CN)_6]^{3-/4-}$ and $[Ru(NH_3)_6]^{2+/3+}$ showed to be near-reversible behavior to all the materials studied. The value of peak separation ($\Delta E_P$) are defined from A. J. Bard, L. R. Faulkner, Electrochemical methods: Fundamentals and applications. 2nd edition, Chapter 2, Pages 63-65, John Wiley & Sons, 2001, ISBN 978-0-471-04372-0 and for both markers were in the range of 80.6 - 90.6 mV, which is higher that reversible value of 59 mV. This fact is due to the carbon sp$^2$ content that is still present for all samples. Meanwhile, the ratio between anodic and cathodic peak heights ($I_{Pa}/I_{Pc}$) is closer to 1.0, which agrees with the near reversibility description. To evaluate the effect of the formation of nanoporous structure in the capacitive properties of the boron doped ultrananocrystaline diamond material treated by molten salt thermal etching, electrochemical impedance measurements were made using both standards (Figure 6 (a) and (b)). The on the inset of Fig. 6(a).

Although boron doped ultrananocrystaline diamond sample etched by molten salt thermal etching for 3 h presented nanopores, it didn't present the highest specific capacitance value. The sample etched for 1 h accomplish it with a value of 3,615.8 $\mu F.cm^{-2}$. The advantage of this method is two to five times faster than electrochemical process as above mentioned.

For all boron doped ultrananocrystaline diamond electrodes, the dependency of the peak current height ($I_P$) with square root of the scan rate ($v^{1/2}$) was evaluated for anodic and cathodic reactions, using both standards. The linear dependence of $I_p$ with $v^{1/2}$ indicated that both reactions are controlled by diffusion - Figure 6 (a) and (b).

The specific effective values of double-layer capacitance ($C_{eff}$) for $[Fe(CN)_6]^{3-/4-}$, $[Ru(NH_3)_6]^{2+/3+}$ standard solutions (all of c = 1 $mmol.L^{-1}$) in 1 $mol.L^{-1}$ KCl and 1 $mol.L^{-1}$ HCl electrolyte solution for pristine and boron doped ultrananocrystaline diamond material treated by molten salt thermal etching with $LiNO_3$ samples in different time of etching (1 h - 3 h) at 450 °C are presented in Table 2. A dependency of the standard solution and the potential applied for the EIS measurement directly influence of the value of $C_{eff}$. For all the standards the boron doped ultrananocrystaline diamond film treated by molten salt thermal etching for 1 h presented the highest value of capacitance independently of the standard or the potential applied.

Table 3 shows values of the specific effective double-layer capacitance ($C_{eff}$), wherein values were estimated using the capacitor element value from electrochemical impedance spectroscopy measurements carried out in $[Fe(CN)_6]^{3-/4-}$, $[Ru(NH_3)_6]^{2+/3+}$ standard solutions (all of c = 1 $mmol.L^{-1}$) in 1 $mol.L^{-1}$ KCl and 1 $mol.L^{-1}$ HCl electrolyte solution for pristine and the diamond structure according to the present invention with $LiNO_3$ samples in different time of etching (1 h - 3 h) at 450 °C.

*Electrochemical sensor*

In an addition example, the present invention can be provided with controlled amounts of non-diamond carbon at the sensing surface of a boron doped diamond electrode, while the diamond structure is nanoporous. Electrochemically active surface therefore increases, and the functional groups bonded to the non-diamond carbon sites are provided for generating a redox peak associated with target species, which reacts with the electrochemically active surface groups bonded to the nondiamond carbon sites when a solution containing the target species is disposed in contact with the sensing surface in use. It is possible to reliably and accurately take a range of different types of electrochemical reading based on one or both of a position and an intensity of the redox peak with a good signal to noise ratio. It has been found that such electrochemical sensor having nanoporous structures combines the advantageous features of electrochemically inert boron doped diamond material with more electrochemically active non-diamond carbon having electrochemically active surface groups and enlarges the electrochemical active area.

One application of this material is in use in electrochemical sensing for detection of heavy metals such as Hg, organic molecules such as dopamine, and other electro-active species.

**Table 1**

| Sample | B(OCH$_3$)$_3$ (sccm) | CO$_2$ (sccm) | CH$_4$ (sccm) | H$_2$ (sccm) | T$_S$ (°C) | P$_{MW}$ (kW) | P (Pa) | t (h) | Thickness (μm) |
|---|---|---|---|---|---|---|---|---|---|
| B-UNCD | 10 | 1 | 5 | 500 | 590 | 6 | 30 | 30 | 4.2±0.1 |

T$_S$ - substrate temperature, P$_{MW}$ - provided microwave power, p - gas mixture pressure, t - deposition duration

| Material | [Fe(CN)$_6$]$^{3-/4-}$ | | | | [Ru(NH$_3$)$_6$]$^{2+/3+}$ | | HCl | |
|---|---|---|---|---|---|---|---|---|
| | I$_{Pa}$/I$_{Pc}$ | ΔE$_P$ | A$_{eff}$/mm$^2$ | C$_{eff}$/μF.cm$^{-2}$ | I$_{Pa}$/I$_{Pc}$ | ΔE$_P$ /mV | Negative/positive potential limit / V | Potential window / V |
| B-UNCD (pristine) | 1.02 | 90.6 | 1404 | 61.8 | 0.98 | 80.6 | -0.91/ 1.25 | 2.16 |
| B-UNCD MSTE LiNO$_3$ 450/1h | 1.00 | 80.6 | 1547 | 3,615.8 | 1.02 | 80.6 | -0.81/1.24 | 2.05 |
| B-UNCD MSTE LiNO$_3$ 450/2h | 1.00 | 80.6 | 1565 | 949.7 | 1.00 | 80.6 | -0.90/1.23 | 2.13 |
| B-UNCD MSTE LiNO$_3$ 450/3h | 0.96 | 80.6 | 1124 | 2,736.1 | 1.00 | 80.6 | -0.94/1.22 | 2.16 |

Table 2

| Material | C$_{eff}$ /μF.cm$^{-2}$ | | |
|---|---|---|---|
| | [Fe(CN)$_6$]$^{3-/4-}$ (E=+0.27 V) | [Ru(NH$_3$)$_6$]$^{2+/3+}$ (E=-0.18 V) | HCl (E=0.00 V) |
| B-UNCD (pristine) | 61.8 | 405.0 | 42.3 |
| B-UNCD MSTE LiNO$_3$ 450/1h | 3,615.8 | 636.3 | 291.2 |
| B-UNCD MSTE LiNO$_3$ 450/2h | 949.7 | 600.5 | 11.9 |
| B-UNCD MSTE LiNO$_3$ 450/3h | 2,736.1 | 551.7 | 30.0 |

Table 3

## Claims

1. A method of nanoporous polycrystalline diamond structure formation having nanoporous structure comprising the steps:

   a. providing a polycrystalline diamond structure;
   b. providing nitrate salt on surface of the polycrystalline diamond structure, wherein the nitrate salt is in solid phase;
   c. heating the polycrystalline diamond structure provided with the nitrate salt to temperature above a melting point of the nitrate salt, thereby providing melted nitrate salt on the polycrystalline diamond structure surface;
   d. etching the polycrystalline diamond structure by the molten nitrate salt.

2. The method according to claim 1, wherein the step of providing nitrate salt on surface of the diamond structure comprising applying nitrate salt powder on the diamond structure surface.

3. The method according to claim 1, wherein the step providing nitrate salt on surface of the diamond structure comprising applying solution of nitrate salt on the diamond structure.

4. The method according to anyone of the preceding claim further comprising the step of supplying oxygen and/or hydrogen and/or air atmosphere and/or water vapor during the etching.

5. The method according to anyone of the preceding claims, wherein the step of etching lasts at least 1 hour, preferably up to 3 hours.

6. The method according to claim 1, wherein the nitrate salt is metal nitrate, preferably mono-valence metal nitrate, more preferably alkali metal nitrate, even more preferably $LiNO_3$.

7. The method according to claim 6, wherein the nitrate salt is $LiNO_3$, the heating of the diamond structure is above 300 °C, preferably above 400 °C.

8. The method according to claim 7, wherein the heating of the diamond structure is about 450 °C and the etching lasts about 1 hour, and wherein the diamond structure is a boron doped ultrananocrystaline diamond.

9. The method according to anyone of the preceding claims, wherein the diamond structure is free-standing diamond or diamond layer deposited on a substrate.

10. The method according to anyone of the preceding claim, wherein the diamond is doped diamond, wherein the dopants are selected from the group of B, P, Si, N or metal, in particular Ni.

11. A nanoporous diamond structure formed by diamond crystals in size from 1 nm to 500 nm interconnected each to other involving voids finally forming a compact porous structure with porosity from 10% to 90%, wherein the structure is having fractal-like geometry.

12. The nanoporous diamond structure according to claim 11, wherein the structure is doped by boron and wherein the capacitive value is at least 3,615.8 $\mu P.cm^{-2}$.

13. A multilayer comprising at least one layer of the nanoporous diamond structure according to claim 11.

14. Use of the nanoporous diamond structure according to claim 11 as an electrode in a battery or a supercapacitor.

15. Use of the nanoporous diamond structure according to claim 11 for detection of heavy metals, organic molecules, and electro-active species.

Fig. 1

Fig. 2

Fig. 3

Fig. 4

Fig. 5

Fig. 6

Fig. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI LIYANG ET AL: "Characterization and formation mechanism of pits on diamond {100} face etched by molten potassium nitrite", INTERNATIONAL JOURNAL OF REFRACTORY METALS AND HARD MATERIALS, ELSEVIER, AMSTERDAM, NL, vol. 71, 14 November 2017 (2017-11-14), pages 129-134, XP085328412, ISSN: 0263-4368, DOI: 10.1016/J.IJRMHM.2017.11.011 * page 129, "Abstract" * * page 130, left-hand column, "2. Experiment" * * page 131, Figure 2 * | 1-10 | INV. C01B32/25 C01B32/28 H01G11/36 H01M4/00 |
| X | ZENG HONGJUN ET AL: "Diamond nanofeathers", DIAMOND AND RELATED MATERIALS, vol. 91, 1 January 2019 (2019-01-01), pages 165-172, XP55896652, NL ISSN: 0925-9635, DOI: 10.1016/j.diamond.2018.11.016 | 11-15 | |
| A | * abstract * * page 166, "Figure 1" & "2.1. Sample fabrication" * * page 167, paragraphs 1 -2 of "3.1. High resolution SEM images analysis" * * page 171, "3.4. Demonstration of diamond nanofeathers as a capacitor material" and "Figure 7" * | 1 | TECHNICAL FIELDS SEARCHED (IPC) C01B H01G H01M |

-/--

The present search report has been drawn up for all claims

| Place of search | Date of completion of the search | Examiner |
|---|---|---|
| The Hague | 2 March 2022 | Rigondaud, Bernard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 21 19 6739

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE THEIJE F.K. ET AL: "Oxidative etching of cleaved synthetic diamond {111} surfaces", SURFACE SCIENCE, vol. 492, no. 1-2, 1 October 2001 (2001-10-01), pages 91-105, XP55896637, AMSTERDAM, NL ISSN: 0039-6028, DOI: 10.1016/S0039-6028(01)01398-X * page 93, right-hand column, "2.2. Liquid etching" * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 2 March 2022 | Rigondaud, Bernard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 2 of 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018119308 A

**Non-patent literature cited in the description**

- **F.K DE THEIJE ; O ROY ; N.J VAN DER LAAG ; W.J.P VAN ENCKEVORT.** Oxidative etching of diamond. *Diamond and Related Materials,* 2000, vol. 9 (3-6), ISSN 0925-9635, 929-934, ht-tps://doi.ora/10.1016/S0925-9635(99)00239-3

- **A. J. BARD ; L. R. FAULKNER.** Electrochemical methods: Fundamentals and applications. John Wiley & Sons, 2001, 63-65